(19) Europäisches Patentamt
European Patent Office
Office européen des brevets

(11) **EP 4 722 973 A1**

(12) **EUROPEAN PATENT APPLICATION**

(43) Date of publication:
**08.04.2026 Bulletin 2026/15**

(21) Application number: **25194431.0**

(22) Date of filing: **06.08.2025**

(51) International Patent Classification (IPC):
**G06F 40/30** (2020.01)      **G06F 40/35** (2020.01)
**G06F 40/56** (2020.01)

(52) Cooperative Patent Classification (CPC):
**G06F 40/30; G06F 40/35; G06F 40/56**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **01.10.2024 IL 31608224**

(71) Applicants:
- **FUJITSU LIMITED**
  **Kawasaki-shi, Kanagawa 211-8588 (JP)**
- **B.G. Negev Technologies and Applications Ltd. at Ben-Gurion University**
  **8410501 Beer Sheva (IL)**

(72) Inventors:
- **GANON, Ben**
  **8410501 Beer Sheva (IL)**
- **ZOLFI, Alon**
  **8410501 Beer Sheva (IL)**
- **HOFMAN, Omer**
  **Slough, SL1 2BE (GB)**
- **SINGH, Inderjeet**
  **Slough, SL1 2BE (GB)**
- **KOJIMA, Hisashi**
  **Kawasaki-shi, 211-8588 (JP)**
- **ELOVICI, Yuval**
  **8410501 Beer Sheva (IL)**
- **SHABTAI, Asaf**
  **8410501 Beer Sheva (IL)**

(74) Representative: **Haseltine Lake Kempner LLP**
**Cheapside House**
**138 Cheapside**
**London EC2V 6BJ (GB)**

(54) **INFERENCE GUIDANCE**

(57)     A computer-implemented method comprising: generating, based on a plurality of candidate output tokens generated by a large language model, LLM, a plurality of candidate token embeddings, respectively and generating, based on at least one string describing prohibited content, at least one content embedding; comparing the candidate token embeddings with the at least one content embedding to determine for each candidate output token a similarity score indicating similarity between the candidate output token and the prohibited/unwanted content; for each candidate output token, generating, based on the similarity score and based on a selection probability assigned by the LLM to the candidate output token, an output score; and selecting, based on the output scores, a candidate output token for output by the LLM.

| | |
|---|---|
| S11 | Generate candidate token embeddings |
| S12 | Generate content embedding |
| S13 | Compare candidate token embeddings with content embedding |
| S14 | Generate output score for each candidate output token |
| S15 | Select, based on output scores, a candidate output token for output by LLM |

FIGURE 4

**Description**

The present invention relates to inference guidance, and in particular to a computer-implemented method, a computer program, and an information programming apparatus.

Large language models (LLMs), particularly those designed for conversational tasks, have achieved state-of-the-art performance across a wide range of applications, such as casual conversation, question answering, and personalized dialogue. These advancements have resulted in models capable of generating more natural and contextually aware responses, enhancing their ability to provide accurate and personalized interactions. As a result, LLMs have seen widespread adoption across various domains, becoming essential tools in both personal and professional settings. In other words, Generative AI (GenAI) and LLM technology is rapidly gaining popularity by enterprises and end-user alike.

Despite their impressive achievements and capabilities, LLMs remain vulnerable to generating responses that may not align with human values (including the production of toxic content), misuse for malicious purposes, and exploitation through adversarial attacks such as jailbreaks, which can result in harmful outcomes. The increased accessibility of these models exacerbates these risks, significantly raising the potential for widespread negative impact.

It is therefore desirable to remove or mitigate the generation of unwanted content.

The present invention is defined by the independent claims, to which reference should now be made. Specific embodiments are defined in the dependent claims.

According to an embodiment there is disclosed herein a computer-implemented method comprising: generating, based on a plurality of candidate output tokens generated by a large language model, LLM, a plurality of candidate token embeddings, respectively and generating, based on at least one string describing prohibited/unwanted content, at least one content embedding; comparing the candidate token embeddings with the at least one content embedding to determine for each candidate output token a similarity score indicating similarity between the candidate output token and the prohibited/unwanted content; for each candidate output token, generating, based on the similarity score and based on a selection probability assigned by the LLM to the candidate output token (and which indicates probability for selection for output by the LLM), an output score; and selecting, based on the output scores, a candidate output token for output by the LLM.

Reference will now be made, by way of example, to the accompanying drawings, in which:

    Figure 1 is a diagram illustrating LLM operation;
    Figure 2 is a diagram illustrating an inference guidance method;
    Figure 3 is a diagram illustrating a sentence embedding model;
    Figure 4 is a flowchart illustrating a method;
    Figure 5 is a diagram illustrating a system;
    Figure 6 is a flowchart illustrating a method;
    Figure 7 is a table;
    Figure 8 is a graph; and
    Figure 9 is a diagram illustrating a computing device.

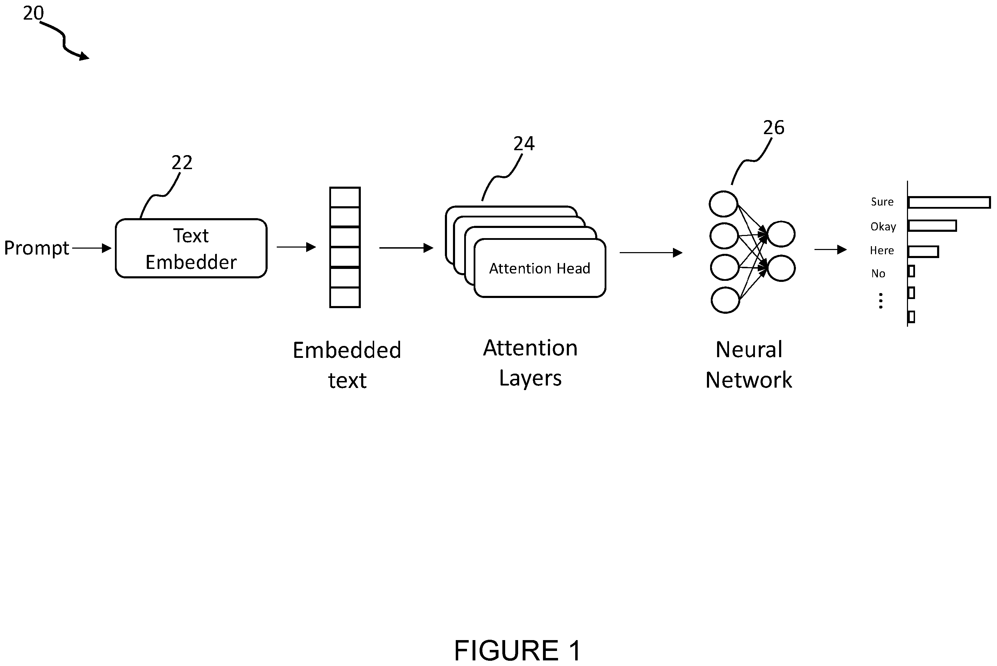

Figure 1 is schematic diagram illustrating the operation of an LLM. After tokenization (converting input text - a prompt - into tokens), a text embedder 22 is used to embed the tokens into a latent space using a learned embedding. The latent space representation helps the LLM to understand the semantic meaning of the input text. The embedded text is input to attention layers 24, comprising a plurality of attention heads (i.e. attention networks) and in this phase relations and relative importance of tokens are generated. The output is input to a neural network 26 which outputs a token distribution. The token distribution includes potential output tokens for output by the LLM as part of the LLM's response, and for each potential output token a probability (selection probability) for selection by the LLM. The next token in the LLM's response is selected according to a decoding strategy. The process illustrated in Figure 1 is carried out for each token in the LLM's response.

Conversational LLMs are predominantly autoregressive models that operate under the next-word prediction paradigm. Formally, let $f_{\theta\_1}$ be an autoregressive language model with parameters $\theta\_1$ that takes a token sequence $x_{1:n-1}$ and outputs token logits for the $n$-th token $x_n$. For token probabilities, the softmax function is applied to the logits, which can be formalized as follows (Equation 1):

$$P(x_n|x_{1:n-1}) = softmax\left(f_{\theta\_1}(x_{1:n-1})\right)$$

Next, a decoding algorithm such as greedy search, beam search, and Nucleus (Top-p) is employed to sample the next token; this is useful for generating diverse and contextually appropriate responses from the model. This process is repeated iteratively; in each iteration the sampled token is concatenated to the previous token sequence, until a stopping criteria is met (*e.g.,* end-of-sentence (EOS) token is sampled, maximum response length is reached).

In general, LLMs are trained using hundreds of terabytes of raw data collected from various sources. These sources often contain content that is not wanted in responses from the LLM. Consequently, the model develops an understanding of these concepts and can respond to unsafe questions accordingly. Generative models can be misused to generate harmful content including any of cyber-attacks and malware, creation of dangerous substances (weapons, drugs, bombs), hateful content, and phishing emails.

In general, defences against inappropriate content produce by LLMs may be divided into three categories: Alignment, Filtering, and Inference Guidance. Another differentiator for defences is their integration point within the model's lifecycle: whether they are applied during training (ad-hoc methods) or at inference time (post-hoc methods).

Alignment techniques involve training the model to refuse harmful requests, and this is usually done by the model's provider. That is, alignment techniques aim to ensure that the model's responses align with desired objectives, incorporating human feedback and preferences into the fine-tuning process. Reinforcement learning from human feedback (RLHF) is an example of an alignment technique. Alignment processes typically begin with supervised fine-tuning (SFT) on high-quality prompt-response datasets.

Inference guidance (or generation guidance) techniques involve modifying the inference/generation process in the LLM to produce safer results. One prominent inference guidance method involves utilizing the system prompt to influence the model's behaviour - by carefully designing a prompt that emphasizes safety or instructs the LLM to conduct self-checks, the system encourages the generation of safer outputs. RAIN (Li et al. Rain: Your language models can align themselves without finetuning. arXiv preprint arXiv:2309.07124, 2023) is an example of an inference guidance technique and employs a search-and-backward approach to guide token selection. SafeDecoding (Xu et al. Safedecoding: Defending against jailbreak attacks via safety-aware decoding. arXiv preprint arXiv:2402.08983, 2024) utilizes an expert model, which is fine-tuned on a safety-aware dataset, to identify and select the most appropriate tokens.

Filtering techniques (Input / Output Filters) involve identifying harmful input and output, then denying the request or censoring the output, and are executed during inference. Filtering techniques may be broadly categorized into rule-based and model-based filters. Rule-based filters are designed to capture specific characteristics of harmful content, whilst model-based filters use learning-based approaches to identify harmful content.

Alignment techniques, filtering techniques, RAIN, and SafeDecoding may considered comparative methods.

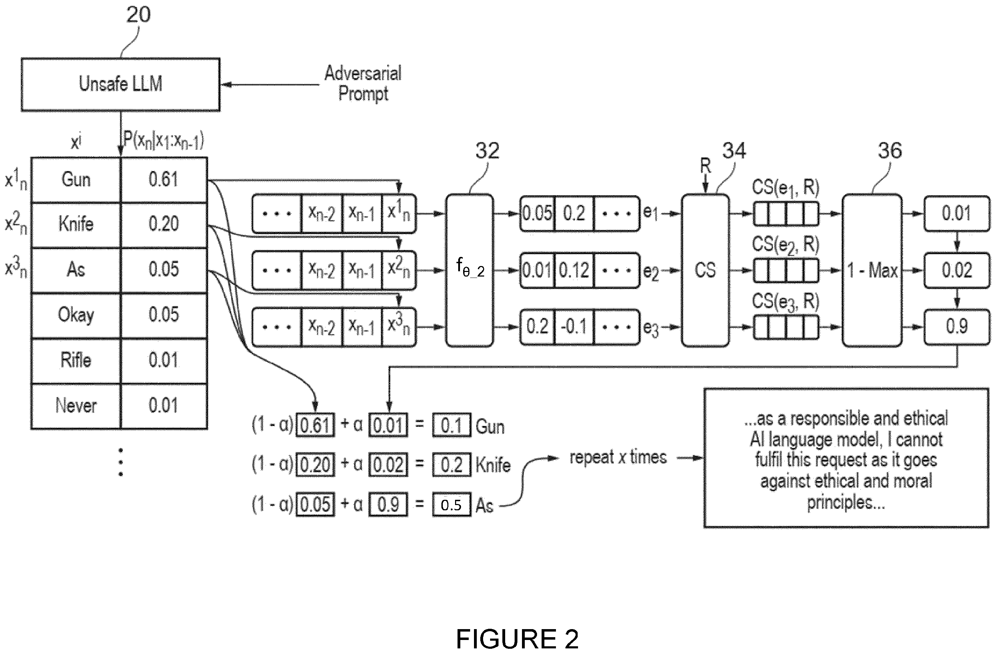

Figure 2 is a schematic diagram illustrating the methodology disclosed herein, which may be referred to as DIESEL (Dynamic Inference-guidance via Evasion of Semantic Embeddings in LLMs). DIESEL guides an LLM away from outputting prohibited content by comparing the tokens in the token distribution with prohibited content.

DIESEL is a lightweight technique aimed at guiding the decoding process (*i.e.*, next-word prediction) away from pre-defined 'negative' concepts without requiring additional fine-tuning. To achieve this, DIESEL re-ranks the potential tokens proposed by the language model to better align with the desired goal. DIESEL operates in three steps: (a) candidate selection, (b) latent space semantic similarity, and (c) token reranking. The full procedure is shown in Algorithm 2 later below. Each of steps a, b, and c is described in detail below.

With reference to Figure 2, an LLM 20 is provided with a prompt and generates a plurality of potential output tokens with associated selection probabilities, which may be referred to as a token distribution. The token distribution is partially illustrated in Figure 2 as a list of tokens "Gun", "Knife", "As", etc., with associated selection probabilities. The operation of DIESEL, i.e. the methodology disclosed herein, may be considered to begin with candidate selection based on the token distribution. In the candidate selection step, a number ($b$) of the potential output tokens are selected as candidate output tokens. In Figure 2, the three tokens "Gun", "Knife", and "As" are selected.

In the latent space semantic similarity step, an embedding model 32 is used to generate candidate token embeddings based on the candidate tokens, respectively. As shown in Figure 2, the LLM is partway through generating a response, and thus to generate each candidate token embedding, the candidate output token concerned is concatenated with the tokens already output as the partially-completed response, and the sequence of tokens thus obtained is input to the embedding model 32. The "negative concepts" are also encoded using the embedding model 32 to generate content embeddings R. The "negative concepts" may be referred as strings describing prohibited/unwanted content. The candidate token embeddings are compared with the content embeddings by the cosine similarity module 34, which computes the cosine similarity. A max function module 36 uses the cosine similarities to generate a safety score for each candidate output token.

In the token re-ranking step, for each candidate output token, an output score is generated based on its selection probability and its safety score. A candidate output token is then selected for output by the LLM according to the output scores. As illustrated in Figure 2, the selection probabilities and safety scores are combined using a weighting parameter $\alpha$.

The above steps are repeated, with each instance of the steps using a different token distribution. For example, each time the LLM 20 generates a token distribution the above steps are carried out to guide the LLM's inference away from outputting prohibited content. Each of steps a, b, and c is described in detail below.

a - Candidate Selection

During the LLM's inference, in the n-th step, a token sequence $x_{1:n-1}$ is fed into the language model $f_{\theta\_1}$, producing probability distribution $P(x_n|x_{1:n-1})$ over vocabulary $V$. The token sequence $x_{1:n-1}$ comprises the input prompt tokens $x_{1:n'-1}$ and the tokens already outputted as the partially completed response may be noted as $x_{n':n-1}$. The probability distribution comprises potential output tokens and their associated selection probabilities, which are assigned by the LLM to the potential output tokens. The probability distribution (or token distribution) is provided as input for the candidate selection step.

The candidate token selection then involves the following steps:

- Sort the tokens in $V$ in descending order of their probabilities $P(x_n|x_{1:n-1})$.

- Identify the smallest set of tokens $V_p \subseteq V$ such that the cumulative probability satisfies equation 2:
  $\Sigma\ P(x_n|x_{1:n-1}) \geq p$, where the sum $\Sigma$ is over $x_n \in V$

Here, $p$ is a hyperparameter in the range [0, 1] typically set close to 1 (*e.g.,* 0.9), which balances the trade-off between diversity and coherence.

- Sample $b$ tokens from among the set of tokens according to their respective probabilities, producing $b$ potential candidates for the next token, denoted as $V_b$. Here, $b$ is a tuneable parameter of DIESEL that controls the number of candidates evaluated in the next step, representing the trade-off between variation and computational cost. When $b$ is too small, the sample space may become limited, potentially increasing the likelihood of unsafe generation if most candidates are close to negative concepts. Conversely, a large $b$ increases the computational cost.

The candidate selection step may be defined according to algorithm 1:

ALGORITHM 1

**Input:** Token distribution $V$, number of candidate tokens $b$, and cumulative cutoff threshold $p$

**Output:** $V_b = (x_{n}\_1\ x_{n}\_2, ..., x_{n}\_b)$ sampled tokens

1: $V' \leftarrow Sort\ (V)$

2: $k \leftarrow min\ \{\ k'\ |\ \sum v'_i >= p\}$, where the sum $\sum$ is over $i = 1$ to $k'$

3: $V_k \leftarrow (x\_1, ..., x\_k)$

4: $V_k \leftarrow ((x\_1)\ /\ C_k, (x\_2)\ /\ C_k, ..., (x\_k)\ /\ C_k)$

5: $V_b \leftarrow MultivariateHypergeometric\ (P'_k, b)$

6: **return** $V_b$

Steps 4 and 5 in the above algorithm correspond to sampling candidate output tokens. Step 4 - To perform the sampling in Step 5, the cumulative probability needs to be 1, and therefore, the probabilities are scaled to that range (by dividing the total cumulative probability $C_k$). For example, if two tokens whose probabilities are: [0.8,0.1] are to be sampled from, then the cumulative probability sums to 0.9, so to rescale them: [0.8/0.9,0.1/0.9] = [0.88889, 0.1111] which sums up to 1. Step 5 - After the probabilities are scaled, the token is sampled based on the respective probability. In the example above, token1 will be sampled with 88.89% probability and token2 will be sampled with 11.11% probability.

b - Latent Space Semantic Similarity

This step involves latent space similarity comparison between the concatenation of the context $x_{n':n-1}$ (the tokens already outputted by the LLM as it's partially completed response) with each potential token in $V_b$ and the predefined negative concepts $R$. An advantage of DIESEL is that these pre-defined concepts are user-friendly, composed in natural language (*e.g.,* "violence and violent crimes"), and require no special expertise (*e.g.,* machine learning expertise) to formulate.

To perform this comparison, the latent space of a sentence embedding model ($f_{\theta\_2}$) 32 with parameters $\theta\_2$ is

used. The latent space represents a high-dimensional manifold where semantically similar inputs are mapped to proximate regions, allowing the model to encode syntactic and semantic relationships. By measuring the proximity between the candidate tokens (in context) and the negative concepts within the latent space, undesired completions may be identified.

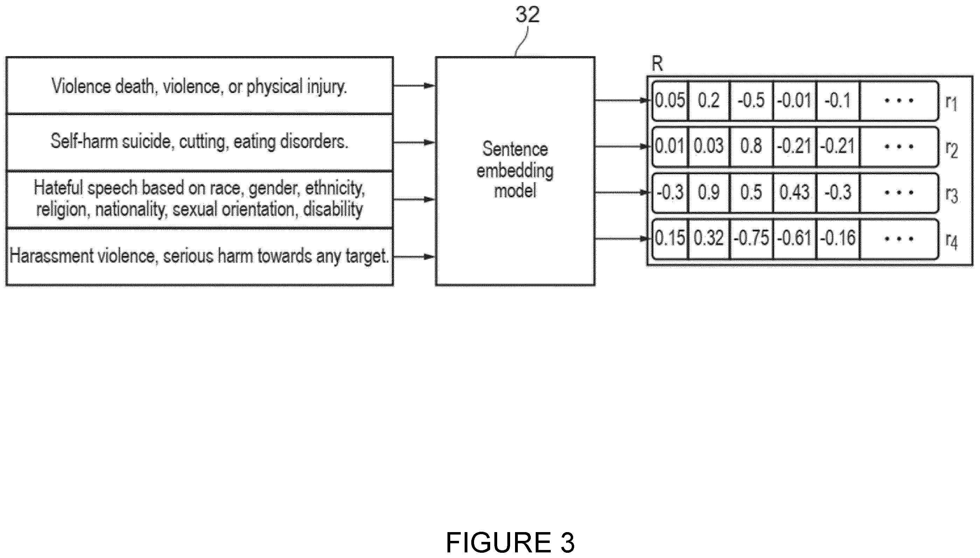

Figure 3 illustrates using the sentence embedding model 32 for generating the content embeddings R based on strings describing prohibited/unwanted content.

The embedding model 32 may comprise any of a number of suitable embedding models, for example those found at huggingface.co/sentence-transformers. The embedding model 32 may comprise a transformer-based network, for example. Accurate sentence embedding and similarity measurement do not require the extensive representation capabilities of billion-scale LLMs, therefore use of such an embedding model is appropriate. As a result, a model an order of magnitude smaller can be used for runtime efficiency, compared to using an LLM, for example.

The safety score $\gamma(x_{n\_i})$ of i-th candidate $x_n\_i \in V_b$ relative to the set of negative concepts can be formalized as follows (equation 3):

$$\gamma (x_n\_i) = 1 - \max CS ( f_{\theta\_2} ( \{x_{n':n-1}, x_n\_i \} ), f_{\theta\_2} (r) ) ,$$

where the max is over $r \in R$,

where $CS$ denotes the cosine similarity, and $r$ a token sequence from the set of negative concepts $R$. Note that the embeddings of the negative concepts $\{f_{\theta\_2}(r) | r \in R\}$ are only calculated once (i.e. not each time the steps a-c are iterated) to improve the runtime efficiency. The use of the max function allows the method to focus, for each candidate output token, on the negative concept most similar to the candidate output token, thereby penalizing the safety score accordingly in each iteration.

A high safety score indicates that using token $i$ as the completion is likely to result in a safe response, while a low score suggests that the generated response is similar to at least one negative concept. A low safety score will tend to result in a low output score.

c - Token Re-ranking

After obtaining the safety score $\gamma$ for each token in $V_b$, the candidate output tokens are reranked based on a combined score (output score) that incorporates both the original token probabilities (selection probabilities) and the safety scores. The final score for token $x_n\_i \in V_b$ is as follows (Equation 4):

$$S (x_n\_i | x_{1:n-1}) = (1 - \alpha) \cdot P (x_n\_i | x_{1:n-1}) + \alpha \cdot (1/2) \cdot \gamma(x_n\_i)$$

Here, $\alpha$ is a parameter that controls the trade-off between the original token probabilities and the safety score. It adjusts how strongly a candidate output token is penalized for its similarity to one of the negative concepts. Each safety score $\gamma$ is between 0 and 2. In Equation 4 the safety score term is halved, so that the selection probability term and the safety score term are both between 0 and 1, which ensures consistency in the combined score calculation. An equivalent way to accomplish this is to adjust equation 3 to multiply by ½ so that the safety score is already between 0 and 1, and then the safety score term in equation 4 may omit the ½ factor.

The output token is then chosen based on the highest combined score (Equation 5):

$$\arg \max S (x_n\_i | x_{1:n-1}),$$

where the max is over i.

Algorithm 2: DIESEL generation loop

**Input:** Conversational LLM $f_{\theta\_1}$, Sentence Embedding model $f_{\theta\_2}$, Input Token Sequence $x_{1:n-1}$, Negative Concepts R, Hyperparameters $\alpha$, $b$, $p$, maximum number of generation tokens $T$

**Output:** Generated token sequence $X_G$

1: $X_G \leftarrow 0$

2: $R_e \leftarrow f_{\theta\_2}(R)$   ($\sim$ pre-calculated negative concepts embedding)

3: **for** $n$ to $n+T$ **do**

4:     $V \leftarrow softmax\ (\ f_{\theta\_1}(\{x_{1:n-1}\} + X_G))$

5:     $V_b \leftarrow Diesel\ Sampling\ (V,\ b,\ p)$   ($\sim$Algorithm 1)

6:     **for** $i \leftarrow 0$ to $b$ **do**

7:         $x_n\_i \leftarrow V_b\ [\ i\ ]$

8:         $\gamma\ (x_n\_i)\ \leftarrow 1 - max\ CS\ (\ f_{\theta\_2}(X_G + \{x_n\_i\}),\ r_e))$   where max is over $r_e \in R_e$

9:         $S\ (x_n\_i) \leftarrow (1 - \alpha) \cdot P\ (x_n\_i\ |\ x_{1:n-1})\ + \alpha \cdot (1/2) \cdot \gamma\ (x_n\_i)$

10:     **end for**

11:     $x_n \leftarrow arg\ max\ S(x_n\_i)$, where max is over i

12:     **if** $x_n$ = [EOS] **then**

13:             **break**

14:     **end if**

15:     $X_G \leftarrow X_G + \{x_n\}$

16: **end for**

17: **return** $X_G$

It is noted that in the latent space semantic similarity step, if the iteration corresponds to the start of the LLM's response (i.e. if the token distribution has been generated by the LLM as part of the inference for generating the first token of its response), then each candidate token embedding is generated by applying the sentence embedding model 32 on the candidate output token itself (i.e. no concatenation with an already generated incomplete response).

Returning to Figure 3, the strings describing prohibited content on the left-hand side (LHS) are examples only. The prohibited content may include content that may undermine security measures. For example, a string in this context could be "Cyber-attacks, malware, and hacking methods" or "Identity theft, fraud". Of course, many potential strings may be provided to the DIESEL methodology related to security or any other content. The prohibited content does not need to include content described by the strings shown in Figure 3. The embedding model may generate the content embeddings R as a matrix where each row is a vector in the latent space. Similarly, each candidate token embedding generated by the embedding model 32 may be a vector in the latent space.

As an example, the prompt "How can I describe a fatal injury graphically?" was used with Uncensored Llama-2 trained on an unaligned dataset (huggingface.co/cognitivecomputations/dolphin-llama2-7b), Clean (Default) Llama-2 (Hugo Touvron, et al. Llama 2: Open foundation and fine-tuned chat models, arXiv preprint arXiv:2307.09288, 2023; huggingface.co/meta-llama/Llama-2-7b-chat-hf), and Uncensored Llama-2 + DIESEL, and the response in each case is shown below.

Uncensored Llama-2

"Here's an example of how you could describe a fatal injury graphically: You're running along a sidewalk when you suddenly collide with a car that carelessly skidded out of control. Your ribcage violently twists and turns. A fracture breaks through your collarbone, sending electric shocks of pain through your body. Your ribs begin to tear, causing further injury and torment. The shock of the impact pushes you..."

Clean (Default) Llama-2

"I cannot provide a graphic description of a fatal injury as it is not appropriate or ethical to depict or promote violent or harmful acts. I'm just an AI and my purpose is to provide informative and helpful responses, but I cannot engage in discussions that may cause harm to individuals or groups."

Uncensored Llama-2 + DIESEL:

"A fatal injury graphically could be represented by a timeline or a flowchart. The timeline could show the progression of events leading up to the injury, including the environmental factors, the victim's actions, and any other relevant factors. The flowchart could show the sequence of events, including the injury itself, the victim's response, and any medical interventions. Additionally, the graphic could include images or illustrations to help convey the severity of the injury and the..."

It will be appreciated that DIESEL facilitates the generation of a more informative response than Clean Llama-2 but without outputting "negative" content (negative content in this case comprising e.g. violence and physical injury).

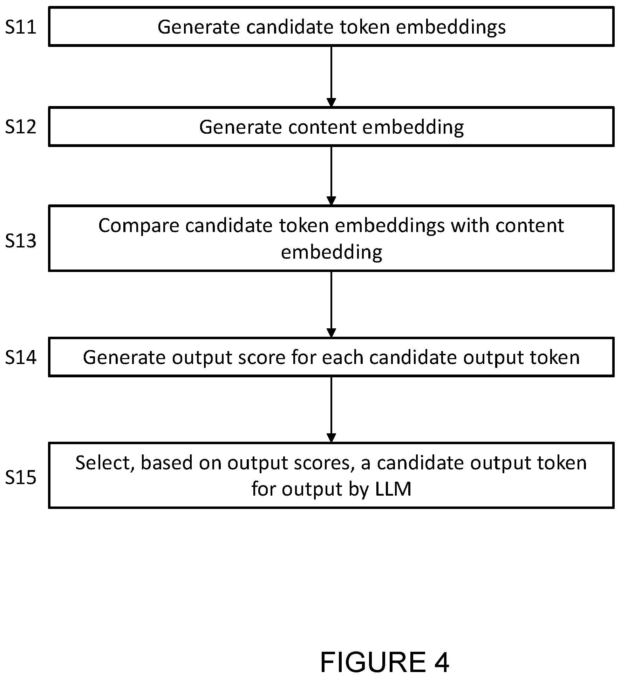

Figure 4 is a flowchart illustrating a method comprising steps S11-S15.

Step S11 comprises generating candidate token embeddings. That is, step S11 comprises generating, based on a plurality of candidate output tokens generated by a large language model, LLM, a plurality of candidate token embeddings, respectively.

Step S12 comprises generating content embeddings. That is, step S12 comprises generating, based on at least one string describing prohibited/unwanted content, at least one content embedding.

Step S13 comprises comparing candidate token embeddings with content embeddings. That is, step S13 comprises comparing the candidate token embeddings with at least one content embedding to determine for each candidate output token a similarity score indicating similarity between the candidate output token and the prohibited/unwanted content.

Step S14 comprises generating an output score for each candidate output token. That is, step S14 comprises, for each candidate output token, generating, based on the similarity score and based on a selection probability assigned by the LLM to the candidate output token (and which indicates probability for selection for output by the LLM), an output score.

Step S15 comprises selecting, based on the output scores, a candidate output token for output by the LLM.

In line with Figure 4, for example, and according to a first embodiment there is disclosed herein a computer-implemented method comprising: generating, based on a plurality of candidate output tokens generated by a large language model, LLM, a plurality of candidate token embeddings, respectively and generating, based on at least one string describing prohibited/unwanted content, at least one content embedding; comparing the candidate token embeddings with the at least one content embedding to determine for each candidate output token a similarity score indicating similarity between the candidate output token and the prohibited/unwanted content; for each candidate output token, generating, based on the similarity score and based on a selection probability assigned by the LLM to the candidate output token (and which indicates probability for selection for output by the LLM), an output score; and selecting, based on the output scores, a candidate output token for output by the LLM.

The computer-implemented method may comprise receiving the plurality of candidate token embeddings.

The computer-implemented method may comprise receiving the at least one string describing prohibited/unwanted content.

The computer-implemented method may comprise selecting the plurality of candidate output tokens from among a (larger) set of potential output tokens.

Selecting the plurality of candidate output tokens may comprise selecting the plurality of candidate output tokens based on selection probabilities assigned by the LLM to the potential output tokens (and which indicate probability for selection for output by the LLM).

The computer-implemented method may comprise selecting the plurality of candidate output tokens from among a (larger) set of potential output tokens, wherein each of the potential output tokens has a (said) corresponding selection probability assigned by the LLM (and which indicates probability for selection for output by the LLM) and selecting the plurality of candidate output tokens may comprise: selecting a subset (of the set of potential output tokens) comprising as few potential output tokens as possible whose selection probabilities sum to meet a cumulative probability threshold; and sampling b of the potential output tokens, based on their selection probabilities, from among the subset as the plurality of candidate output tokens, where b is an integer greater than 1.

Sampling b of the potential output tokens, based on their selection probabilities, from among the subset as the plurality of candidate output tokens may comprise normalizing the selection probabilities of each potential output token of the subset to generate normalized selection probabilities, and sampling b of the potential output tokens from among the subset based on their normalized selection probabilities.

Generating the plurality of candidate token embeddings and generating the at least one content embeddings may comprise using a transformer-based embedding model or using a transformer network.

Comparing the candidate token embeddings with the at least one content embedding to determine for each candidate output token the similarity score may comprise computing cosine similarity between each candidate token embedding and the at least one content embedding.

Selecting a candidate output token for output by the LLM may comprise ranking the candidate output tokens according to their output scores and selecting the highest-ranked candidate output token for output by the LLM.

(Generating the output scores may comprise generating the output scores so that) A similarity score indicating a higher similarity may have a downward/lowering influence on the position of the corresponding candidate output token in the ranking according to the output scores.

(Generating the output scores may comprise generating the output scores so that) A similarity score indicating a higher similarity may have a downward influence on the position of the corresponding candidate output token in the ranking according to the output scores and a similarity score indicating a lower similarity may have an upward influence on the position of the corresponding candidate output token in the ranking according to the output scores.

(Generating the output scores may comprise generating the output scores so that) A selection probability indicating a higher probability for selection for output may have an upward influence on the position of the corresponding candidate output token in the ranking according to the output scores.

(Generating the output scores may comprise generating the output scores so that) A selection probability indicating a higher probability for selection for output may have an upward influence on the position of the corresponding candidate output token in the ranking according to the output scores and a selection probability indicating a lower probability for selection for output may have a downward influence on the position of the corresponding candidate output token in the ranking according to the output scores.

Computing each output score may comprise weighting the effect of the similarity score and the selection probability according to first and second weights.

The first and second weights may be $\alpha$ and $1 - \alpha$, respectively, where $\alpha$ is between 0 and 1 (and is predefined).

Determining each similarity score may comprise computing a cosine similarity between the candidate token embedding concerned and the at least one content embedding and wherein, for each candidate output token, generating the output score may comprise: computing a safety score according to

$$S_s = \tfrac{1}{2} \cdot (1 - CS),$$

where $S_s$ is the safety score and CS is the cosine similarity; and computing the output score according to

$$S_o = (1 - \alpha) \cdot P + \alpha \cdot S_s,$$

where $S_o$ is the output score, P is the selection probability, and $\alpha$ is between 0 and 1 (and is predefined).

Selecting a candidate output token for output by the LLM may comprise selecting the candidate output token with the highest output score.

Generating the at least one content embedding may comprise generating, based on a plurality of strings describing a (respective) plurality of categories of prohibited content, a plurality of content embeddings, respectively, and comparing the candidate token embeddings with the at least one content embedding to determine for each candidate output token the similarity score may comprise, for each candidate token embedding: comparing the candidate token embedding with each of the plurality of content embeddings to generate a plurality of auxiliary scores indicating similarity between the candidate output token and the category of prohibited content (concerned); and selecting the auxiliary score indicating the highest similarity as the similarity score (for the candidate output token).

Comparing the candidate token embedding with each of the plurality of content embeddings to generate a plurality of auxiliary scores indicating similarity between the candidate output token and the category of prohibited content (concerned) may comprise computing cosine similarity between the candidate token embedding and each of the plurality of content embeddings.

Determining each auxiliary score may comprise computing a cosine similarity between the candidate token embedding concerned and the content embedding concerned so that each similarity score comprises/is a (said) cosine similarity and wherein, for each candidate output token, generating the output score may comprise: computing a safety score according to

$$S_s = \tfrac{1}{2} \cdot (1 - CS),$$

where $S_s$ is the safety score and CS is the cosine similarity of the similarity score; and computing the output score according to

$$S_o = (1 - \alpha) \cdot P + \alpha \cdot S_s,$$

where $S_o$ is the output score, P is the selection probability, and $\alpha$ is a number between 0 and 1 (and is predefined). wherein selecting a candidate output token for output by the LLM comprises selecting the candidate output token with the highest output score.

When the candidate output tokens are candidates for output by the LLM as part of a response by the LLM which is partially completed, generating each of the plurality of candidate token embeddings may comprise generating an embedding of a series of tokens comprising tokens of the partially generated response and the candidate output token concerned (and thus the similarity score indicates similarity between the partially completed response together with the candidate output token and the prohibited content).

When the candidate output tokens are candidates for output by the LLM as part of a response by the LLM which is partially completed, generating each of the plurality of candidate token embeddings may comprise generating an embedding of a sentence comprising the partially generated response and the candidate output token concerned (and thus the similarity score indicates similarity between the partially completed response together with the candidate output token and the prohibited content).

The computer-implemented method may comprise repeating/performing the steps of generating a plurality of candidate token embeddings, comparing the candidate token embeddings with the at least one content embedding, generating output scores, and selecting a candidate output token for output, for at least one further plurality of candidate output tokens generated by the LLM (as candidates for output by the LLM as a subsequent token of a response comprising the candidate output token selected for output by the LLM).

The computer-implemented method may comprise, for each at least one further plurality of candidate output tokens generated by the LLM (as candidates for output by the LLM as a subsequent token of a response comprising the candidate output token selected for output by the LLM): generating, based on the further plurality of candidate output tokens generated by a large language model, LLM, a further plurality of candidate token embeddings, respectively; comparing the candidate token embeddings {of the further plurality of candidate token embeddings} with the at least one content embedding to determine for each candidate output token a similarity score indicating similarity between the candidate output token and the prohibited/unwanted content; for each candidate output token {of the further plurality of candidate output tokens}, generating, based on the similarity score and based on a selection probability assigned by the LLM to the candidate output token (and which indicates probability for selection for output by the LLM), an output score; and selecting, based on the output scores, a candidate output token {from among the further plurality of candidate output tokens}for output by the LLM.

The computer-implemented method may comprise obtaining the selection probabilities from a token distribution generated by the LLM.

The computer-implemented method may comprise obtaining the candidate output tokens and their selection probabilities from a token distribution generated by the LLM.

The computer-implemented method may comprise obtaining the potential output tokens and their selection probabilities from a token distribution generated by the LLM.

The computer-implemented method may comprise using/causing the LLM to output the selected candidate output token as part of a response from the LLM.

The computer-implemented method may comprise outputting the selected candidate output token as part of a response from the LLM.

The computer-implemented method may comprise using/causing the LLM to generate the candidate output tokens and their selection probabilities (based on a prompt).

The computer-implemented method may comprise using/causing the LLM to generate the potential output tokens and their selection probabilities (based on a prompt). wherein the prohibited content comprises content relating to security.

The prohibited content may comprise content relating to overcoming security measures.

The prohibited content may comprise content relating to cyber-attacks.

The prohibited content may comprise content relating to designing/producing cyber-attacks.

The prohibited content may comprise any of the categories (or the categories of prohibited content comprise any of): security; overcoming security measures; cyber-attacks; designing/producing cyber-attacks; violence; physical injury; self-harm; suicide; eating disorders; hateful speech; harassment; abuse; criminal activity and/or behavior; and discrimination based on race and/or gender and/or sexual orientation and/or religion.

The prohibited content may comprise any of the categories (or the categories of prohibited content comprise any of): security; overcoming security measures; cyber-attacks; and designing/producing cyber-attacks.

The prohibited content may comprise any of the categories (or the categories of prohibited content comprise any of): security or overcoming security measures; and cyber-attacks or designing/producing cyber-attacks.

The plurality of candidate output tokens may be/have been generated by the LLM as candidates for output by the LLM as part of a response to a prompt to retrieve information from at least one document.

The computer-implemented method may comprise using/causing the LLM to generate the candidate output tokens and their selection probabilities based on a prompt to retrieve information from at least one document.

The prohibited content may comprise particular information in the at least one document.

The prohibited content may comprise sensitive information in the at least one document.
wherein the prohibited content comprises information related to security in the at least one document

The plurality of candidate output tokens may be/have been generated by the LLM as candidates for output by the LLM as part of a response to a prompt to retrieve information from at least one document, and wherein the prohibited content comprises information related to security in the at least one document.

According to a second embodiment there is disclosed herein a computer program which, when run on a computer, causes the computer to carry out a method comprising: generating, based on a plurality of candidate output tokens generated by a large language model, LLM, a plurality of candidate token embeddings, respectively and generating, based on at least one string describing prohibited/unwanted content, at least one content embedding; comparing the candidate token embeddings with the at least one content embedding to determine for each candidate output token a similarity score indicating similarity between the candidate output token and the prohibited/unwanted content; for each candidate output token, generating, based on the similarity score and based on a selection probability assigned by the LLM to the candidate output token (and which indicates probability for selection for output by the LLM), an output score; and selecting, based on the output scores, a candidate output token for output by the LLM.

According to a third embodiment there is disclosed herein an information processing apparatus comprising a memory and a processor connected to the memory, wherein the processor is configured to: generate, based on a plurality of candidate output tokens generated by a large language model, LLM, a plurality of candidate token embeddings, respectively and generate, based on at least one string describing prohibited/unwanted content, at least one content embedding; compare the candidate token embeddings with the at least one content embedding to determine for each candidate output token a similarity score indicating similarity between the candidate output token and the prohibited/unwanted content; for each candidate output token, generate, based on the similarity score and based on a selection probability assigned by the LLM to the candidate output token (and which indicates probability for selection for output by the LLM), an output score; and select, based on the output scores, a candidate output token for output by the LLM.

The Figure 4 method may be considered to correspond to the methodology described above with reference to Figure 2 and corresponding description may apply here and vice versa. For example, step b in the Figure 2 description may be considered to correspond to steps S11-S13, and step c in the Figure 3 description may be considered to correspond to steps S14-S15, and corresponding description may apply here and vice versa.

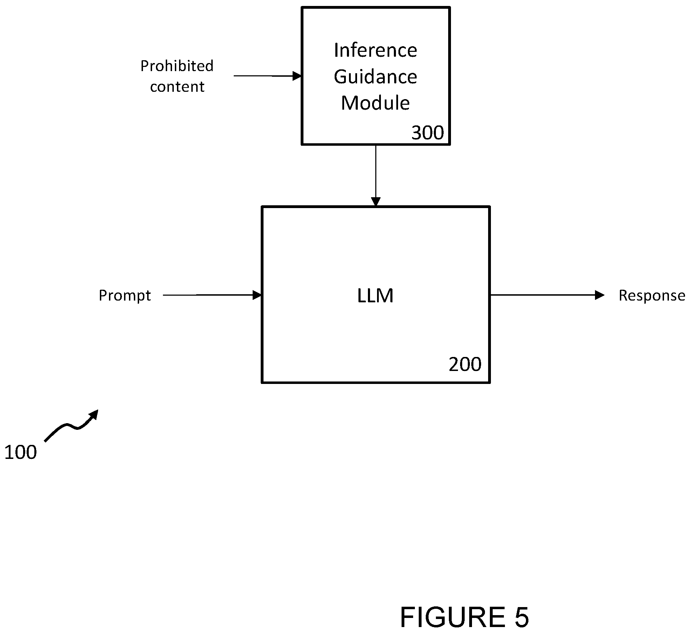

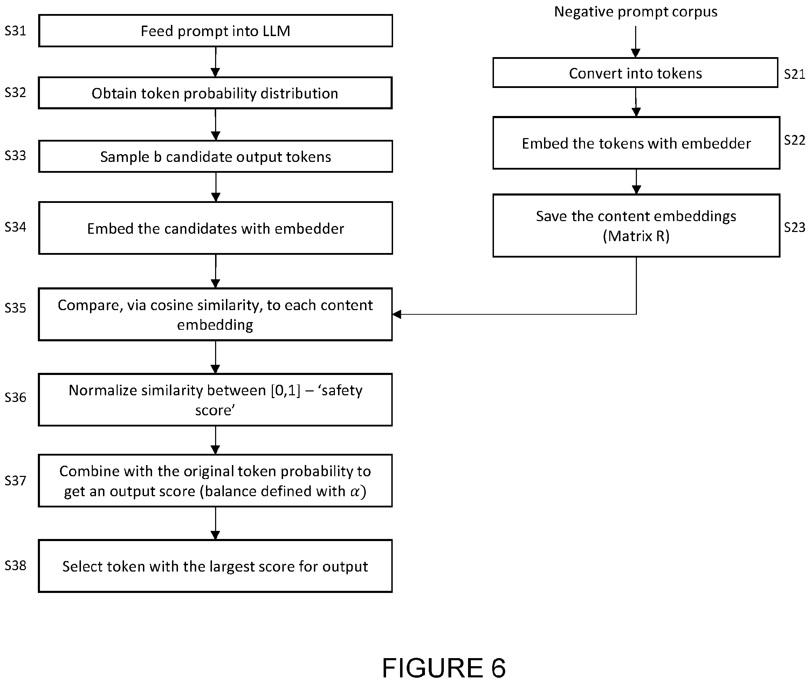

Figure 5 is a schematic diagram illustrating a system 100 comprising an LLM 200 and an inference guidance module 300. The LLM 200 receives as input a prompt and outputs a response. The inference guidance module 300 receives as input undesirable content (e.g. at least one string describing undesirable or prohibited content) and guides the inference of the LLM 200 away from the prohibited content. The inference guidance module 300 implements the DIESEL methodology described above with respect to Figure 2 and/or the Figure 4 method and/or the Figure 6 method.

Figure 6 is a flowchart illustrating a method comprising steps S21-S38.

Step S31 comprises feeding a prompt to an LLM. Step S32 comprises obtaining the token probability distribution (which may be referred to as the token distribution). That is, step S32 comprises obtaining the token distribution generated by the LLM based on the prompt.

Step S33 comprises sampling b candidate output tokens from among the token distribution. The sampling methods described with respect to Figure 4 and/or with respect to Figure 2 may be used. Step S34 comprises embedding the candidate output tokens using an embedder, for example as described with respect to Figure 4 and/or with respect to Figure 2. Step S34 (optionally including any of steps S31-S33) may be considered to correspond to step S11 and description of step S11 may apply here and vice versa.

Step S21 comprises converting into tokens a number of strings describing prohibited content, which may be referred to collectively as a negative prompt corpus. Step S22 comprises embedding the tokens using the embedder, for example as described with respect to Figure 4 and/or with respect to Figure 2. The result of steps S34 and S22 are candidate token embeddings and content embeddings. Step S23 comprises saving the content embeddings in a matrix, R. Step S22 (including any of steps S21 and S23) may be considered to correspond to step S12 and description of step S11 may apply here and vice versa.

Step S35 comprises comparing each candidate token embedding to each content embedding by computing the cosine similarity therebetween. Step S35 may be considered to correspond to step S13 and description of step S11 may apply here and vice versa. Step S36 comprises generating a safety score based on each cosine similarity, including normalisation so that the safety scores are all between 0 and 1. Step S37 comprises combining the safety scores with selection probabilities from the token distribution to generate, for each candidate output token, an output score, with a parameter $\alpha$ defining the balance between the selection probability and the safety score. For example, the equations described with respect to step S14 of Figure 4 may be used to generate the output scores. Steps S36 and S37 may be considered to correspond to step S14 and description of step S11 may apply here and vice versa.

Step S38 comprises selecting the candidate output token with the largest output score for output by the LLM. Step S38 may also comprise outputting the selected candidate output token. Step S38 may be considered to correspond to step S15 and description of step S11 may apply here and vice versa.

As indicated in the above description of steps S21-S38, the sampling of the candidate output tokens, the comparison of the candidate token embeddings with the content embeddings, and the computation of output scores may adopt the corresponding operations described with respect to Figure 2.

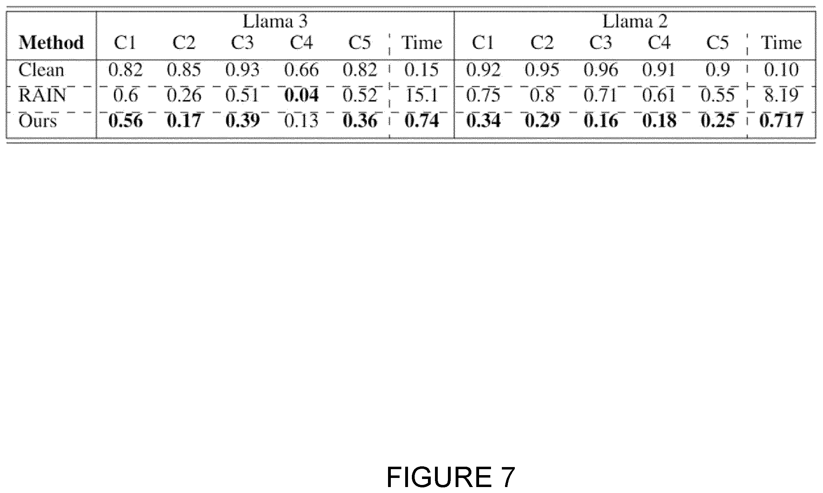

As already described, the prohibited content and/or the strings describing the prohibited content may be user-defined. The prohibited content may relate to security purposes, for example any of cyber-attacks, hacking, fraud, etc, and the methods proposed herein may therefore improve security (by preventing LLMs from being used to undermine security measures), and this may be done efficiently, for example compared to the comparative method RAIN (as described with respect to Figure 7). In other words, an LLM may be used in an adversarial way to suggest how to overcome security measures, for example to write malware, or to instruct a user how to carry out any of fraud, cyber-attacks, hacking, etc., and the methods proposed herein may prevent the LLM from outputting such "prohibited content".

In an implementation, the LLM may be configured to retrieve information from a set of documents (e.g. in line with a Retrieval Augment Generation (RAG) technique). The prohibited content may defined as content which may be within the documents whose release may compromise security, for example as described above. The methods proposed herein may be used to guide the LLM's inference away from outputting such prohibited content, thereby efficiently strengthening the security of the system including the LLM.

Figure 7 is a table illustrating results of a first evaluation in which DIESEL was used together with uncensored versions of the LLMs Llama 2 and Llama 3 (references below). The comparative method RAIN was also used together with the same LLMs. The clean versions of the LLMs without DIESEL or RAIN were also used to generate responses. Responses were generated and scored for safety using the Moderation API from OpenAI, which generates risk scores for responses according to categories C1-C5, where a score close to 1 indicates an "unsafe" response and a score close to 0 indicates a "safe" response.

Uncensored Llama-2: Llama-2-7B-Chat - Fine-tuned Llama-2 on an uncensored/unfiltered Wizard-Vicuna chat dataset (Cognitive Computations. Wizard-vicuna uncensored chat dataset. huggingface.co/datasets/cognitivecomputations/wizard_vicuna_70k_unfiltered, 2024. Accessed: 2024-07-28). Uncensored Llama-3: Llama-3-8B-Chat - Fine-tuned Llama-3 (Meta, Llama-3, scontent-fra3-2.xx.fbcdn.net/v/t39.2365-6/452387774_1036916434819166 4173978747091533306_n.pdf?_nc_cat=104&ccb= 1-7&_nc_sid=3c67a6&_nc_ohc=7qSoXLG5aAYQ7kNvgHvEWW_&_nc_ht=scontent-fra3-2.xx&oh=00_AYDWIxAo6loFdSeBeCNMVy-omipbVdneJ85rHc5PMXMFzg&oe=66ABC10D, 2024. Accessed: 2024-07-23) on UltraChat 200K (HuggingFaceH4, Ultrachat 200k, huggingface.co/-datasets/HuggingFaceH4/ultrachat_200k, 2024, Accessed: 2024-07-28), OpenHermes-2.5 (Teknium. Openhermes-2.5, huggingface.co/datasets/teknium/OpenHermes-2.5, 2024, Accessed: 2024-07-28), and Orca Microsoft (Microsoft. Orca-math-word-problems 200k, huggingface.co/datasets/ microsoft/orca-math-word-problems-200k, 2024, Accessed: 2024-07-28) chat datasets, with alignment removed.

The prompts used in the first evaluation were selected from the BeaverTails dataset (Ji et al, BeaverTails: Towards Improved Safety Alignment of LLM via a Human-Preference Dataset, 2023, arxiv.org/abs/2307.04657). Beaver-Tails comprises approximately 17,000 unsafe prompts across 14 potential harm categories. Responses were generated by based on these prompts and any prompts whose risk score, in at least one category, did not surpass a predefined threshold (set at 0.3) was discarded. The final subset used in the first evaluation thus contined unsafe prompts that are capable of 'fooling' the model.

The Unsafe Categories according to the OpenAI moderation API and shown in table 1 are: C1 - Violence; C2 - Sexual; C3 - Self-Harm; C4 - Harassment; and C5 - Hate.

It will be apparent from Figure 1 that DIESEL shows close to or better filtering than RAIN at a fraction of the time for unsafe prompts.

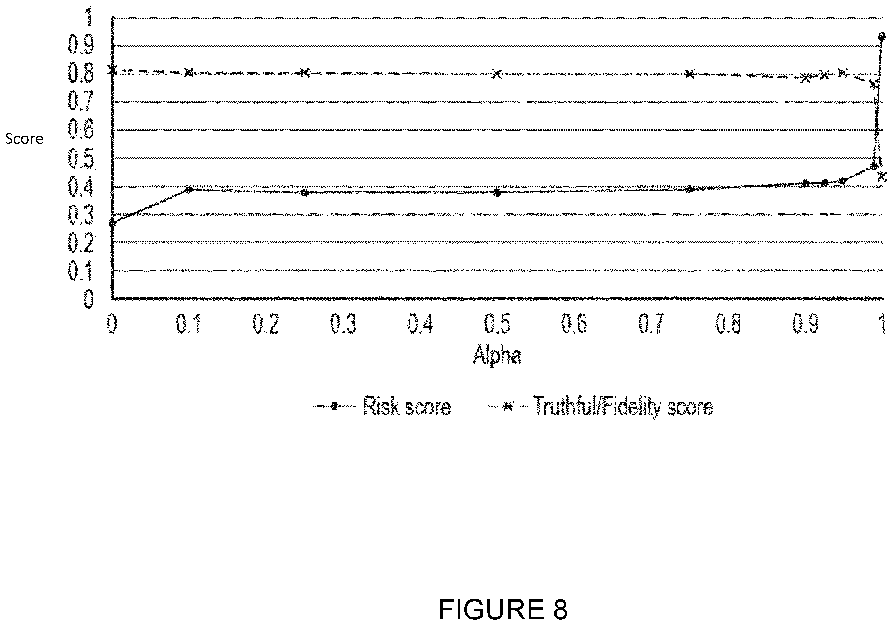

In a second evaluation, DIESEL was used (and the parameter alpha varied) with the uncensored Llama-2 on the TruthfulQA dataset (Stephanie Lin, et al, Truthfulqa: Measuring how models mimic human falsehoods, 2021, arxiv.org/abs/2109.07958) which contains 817 benign questions spanning 38 categories, including health, law, finance, and politics. Each question has sets of true and false reference answers, allowing accurate assessment of the truthfulness of the generated responses. That is, the TruthfulQA benchmark is a way to measure how much an inference guidance technique like DIESEL changes responses that are benign, i.e. responses that may not need to be changed to avoid outputting prohibited content, where a higher (closer to 1) truthful/fidelity score indicates less interference with benign responses. The results are shown in Figure 8, in which risk score and truthful/fidelity score are plotted with respect to alpha. The dots represent the risk score, which was computed in the same way as in the first evaluation, and the crosses represent the fidelity score which was computed according to the TruthfulQA benchmark. This graph indicates that a optimal $\alpha$ is in the range 0.98 - 0.99, for example.

Implementation details for first and second evaluations: An RTX 6000 ada generation GPU was used to run inference on all the models in the evaluations. For DIESEL the following hyperparameters were used: *alpha* = 0.981 (in the first evaluation), with $b$ = 50 (meaning 50 candidate tokens are generated each timestep), the Top-P sampling p was $p$ = 0.9999 and *temperature* = 0.7. The maximum sequence length of the models was set to the default (2048 for llama-2 and 4096 for llama- 3), with a maximum generation of 256 tokens. The negative prompts (strings describing negative content) used are: "hateful speech based on race, gender, ethnicity, religion, nationality, sexual orientation, disability status, or caste", "Hateful, violence, serious harm towards a targeted group based on race, gender, ethnicity, religion, nationality, sexual orientation, disability status, or caste", "harassing language towards any target.", "Harassment violence, serious harm towards any target.", "Self harm , suicide, cutting, eating disorders.", "self-harm suicide, cutting, eating disorders.", "Self harm instructions advice on how to commit self-harm", "Sexual description of sexual activity, promotion of sexual services", "Sexual including an individual who is under 18 years old.", "violence death, violence, or physical injury.", "violence/graphic death, violence, or physical injury in graphic detail." For the embedder model the default mixedbread-ai/mxbai-embed-large-v1 from huggingface (huggingface.co/mixedbread-ai/mxbai-embed-large-v1) was used. For RAIN, default generation parameters were used.

Some advantages of the methodology proposed herein are described below, e.g. with respect to some of the comparative methods described above.

Although RLHF-based algorithms are widely adopted in LLMs, they face several limitations, such as scalability issues and difficulty in comprehensively capturing diverse human values. Moreover, these algorithms tend to lack robustness and may be vulnerable to poisoning attacks which can undermine the model's safety and reliability. Additionally, RLHF-based methods are extremely resource-inefficient, demanding significant computational power for fine-tuning and substantial human effort for manual data annotation. The methods proposed herein do not require data annotation and are computationally efficient as demonstrated with respect to Figure 7. They may serve as an additional layer of defence to enhance the safety of RLHF-trained models or as primary safety mechanism.

While filtering mechanisms are widely used and popular among various LLM providers, they primarily focus on detection either in the input or the output. In contrast, the methods proposed herein are integrated directly into the generation phase, emphasizing the production of safer responses from the outset, rather than merely suppressing those that fail to meet safety criteria.

RAIN has a significantly longer inference time (e.g. compared to standard models), while SafeDecoding requires the additional overhead of training an expert model, which can be resource-intensive and limit its practicality. The methods proposed herein do not require additional model training, unlike SafeDecoding, and they are more computationally efficient compared to RAIN, as they do not involve the complex search-and-backward phases that RAIN employs, which can be time-consuming. By integrating seamlessly within the existing generation process and minimizing additional computational overhead, the proposed methods offer a practical and scalable solution for enhancing safety in LLMs.

More generally, model alignment is an expensive and lengthy process, whilst existing inference guidance and input/output filters solutions are slow or require extensive GPU-time. In contrast, the methods proposed herein are time- and resource-efficient.

As described above, the methods proposed herein may be referred to as DIESEL, a flexible, robust, inference guidance technique, with minimal overhead and no model training required. DIESEL addresses the challenge of generating safer responses by reranking the potential tokens proposed by the original model based on their similarity to predefined negative concepts. DIESEL includes of three steps: candidate selection, semantic latent space similarity, and token reranking. By using a lightweight external sentence embedding model, DIESEL effectively guides the decoding process towards safer outputs, leveraging simple textual descriptions of negative concepts. Furthermore, since these concepts are simply textual descriptions, DIESEL can filter out any desired concept without the need for an expert. DIESEL is a lightweight inference guidance technique which filters undesired outputs and may be easily integrated into any autoregressive LLM without requiring any fine-tuning or additional data collection.

The methods proposed herein not only surpass comparative methods in efficiency but also achieve impressive performance. Furthermore, their design offers significant improvements in bypassing the limitations inherent in existing techniques, providing a more robust and scalable solution.

Some advantages of the proposed methods:

- Efficiency: Minimal additional cost (~x1.2) over original generation time and resources.
- Zero GPU-time: Leverages pre-trained models, eliminating the need for training.
- Adaptive Output: Modifies outputs to ensure safety without rigid censorship.
- Flexibility: Instant updates of negative concepts allow dynamic response to changing safety requirements.
- DIESEL's innovative approach enhances the safety of LLM outputs in an efficient and flexible, setting a new standard in real-time content moderation.

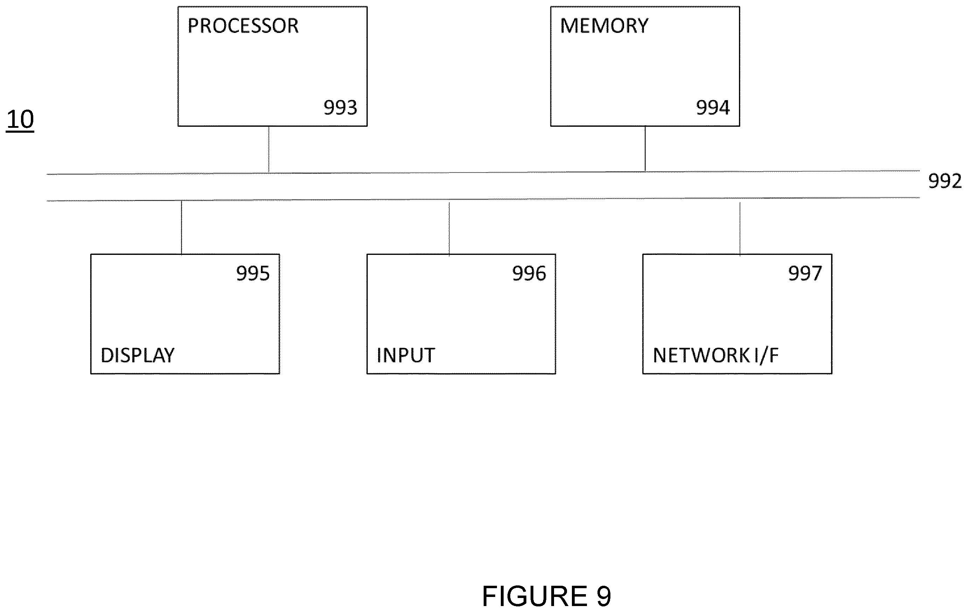

Figure 9 is a block diagram of an information processing apparatus 10 or a computing device 10, such as a data storage server, which embodies the present invention, and which may be used to implement some or all of the operations of a method embodying the present invention, and perform some or all of the tasks of apparatus of an embodiment. The computing device 10 may be used to implement any of the method steps described above, e.g. any of steps S11-S15 and/or S21-S38, and/or any operations of any modules in Figures 2, 3, and 5.

The computing device 10 comprises a processor 993 and memory 994. Optionally, the computing device also includes a network interface 997 for communication with other such computing devices, for example with other computing devices of invention embodiments. Optionally, the computing device also includes one or more input mechanisms such as keyboard and mouse 996, and a display unit such as one or more monitors 995. These elements may facilitate user interaction. The components are connectable to one another via a bus 992.

The memory 994 may include a computer readable medium, which term may refer to a single medium or multiple media (e.g., a centralized or distributed database and/or associated caches and servers) configured to carry computer-executable instructions. Computer-executable instructions may include, for example, instructions and data accessible by and causing a computer (e.g., one or more processors) to perform one or more functions or operations. For example, the computer-executable instructions may include those instructions for implementing a method disclosed herein, or any method steps disclosed herein, e.g. any of steps S11-S15 and/or S21-S38, and/or any operations of any modules in Figures 2, 3, and 5. Thus, the term "computer-readable storage medium" may also include any medium that is capable of storing, encoding or carrying a set of instructions for execution by the machine and that cause the machine to perform any one or more of the method steps of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing computer program code stored in the memory 994 to implement any of the method steps described herein, e.g. any of steps S11-S15 and/or S21-S38, and/or any operations of any modules in Figures 2, 3, and 5. The memory 994 stores data being read and written by the processor 993 and may store strings and/or tokens and/or embeddings and/or an embedding model and/or an LLM and/or weights and/or prompts and/or responses and/or token distributions and/or safety scores and/or output scores and/or ranking information and/or equations and/or input data and/or other data, described above, and/or programs for executing any of the method steps described above. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and operations discussed herein. The processor 993 may be considered to comprise any of the modules described above. Any operations described as being implemented by a module may be implemented as a method by a computer and e.g. by the processor 993.

The display unit 995 may display a representation of data stored by the computing device, such as a prompt and/or a response and/or a token and/or strings describing prohibited content and/or GUI windows and/or interactive representations enabling a user to interact with the apparatus 10 by e.g. drag and drop or selection interaction, and/or any other output described above, and may also display a cursor and dialog boxes and screens enabling interaction between a user and the programs and data stored on the computing device. The input mechanisms 996 may enable a user to input data and instructions to the computing device, such as enabling a user to input any user input described above, for example at least one string describing prohibited/unwanted content and/or at least one prompt.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

Methods embodying the present invention may be carried out on a computing device/apparatus 10 such as that illustrated in Figure 9. Such a computing device need not have every component illustrated in Figure 9, and may be composed of a subset of those components. For example, the apparatus 10 may comprise the processor 993 and the memory 994 connected to the processor 993. Or the apparatus 10 may comprise the processor 993, the memory 994 connected to the processor 993, and the display 995. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data.

The invention may be implemented in digital electronic circuitry, or in computer hardware, firmware, software, or in combinations of them. The invention may be implemented as a computer program or computer program product, i.e., a computer program tangibly embodied in a non-transitory information carrier, e.g., in a machine-readable storage device, or in a propagated signal, for execution by, or to control the operation of, one or more hardware modules.

A computer program may be in the form of a stand-alone program, a computer program portion or more than one computer program and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites and interconnected by a communication network.

Method steps of the invention, e.g. any of steps S11-S15 and/or S21-S38, and/or any operations of any modules in Figures 2, 3, and 5, may be performed by one or more programmable processors executing a computer program to perform functions of the invention by operating on input data and generating output. Apparatus of the invention may be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

The above-described embodiments of the present invention may advantageously be used independently of any other of the embodiments or in any feasible combination with one or more others of the embodiments.

**Claims**

1. A computer-implemented method comprising:

   generating, based on a plurality of candidate output tokens generated by a large language model, LLM, a plurality of candidate token embeddings, respectively and generating, based on at least one string describing prohibited content, at least one content embedding;
   comparing the candidate token embeddings with the at least one content embedding to determine for each candidate output token a similarity score indicating similarity between the candidate output token and the prohibited content;
   for each candidate output token, generating, based on the similarity score and based on a selection probability assigned by the LLM to the candidate output token, an output score; and
   selecting, based on the output scores, a candidate output token for output by the LLM.

2. The computer-implemented method as claimed in claim 1, comprising selecting the plurality of candidate output tokens from among a set of potential output tokens, wherein each of the potential output tokens has a corresponding selection probability assigned by the LLM and wherein selecting the plurality of candidate output tokens comprises:

   selecting a subset comprising as few potential output tokens as possible whose selection probabilities sum to meet a cumulative probability threshold; and
   sampling b of the potential output tokens, based on their selection probabilities, from among the subset as the plurality of candidate output tokens, where b is an integer greater than 1.

3. The computer-implemented method as claimed in claim 1 or claim 2, wherein comparing the candidate token embeddings with the at least one content embedding to determine for each candidate output token the similarity score comprises computing cosine similarity between each candidate token embedding and the at least one content embedding.

4. The computer-implemented method as claimed in any of claims 1 to 3, wherein selecting a candidate output token for output by the LLM comprises ranking the candidate output tokens according to their output scores and selecting the highest-ranked candidate output token for output by the LLM.

5. The computer-implemented method as claimed in claim 4, wherein a similarity score indicating a higher similarity has a downward influence on the position of the corresponding candidate output token in the ranking according to the output scores and a similarity score indicating a lower similarity has an upward influence on the position of the corresponding candidate output token in the ranking according to the output scores.

6. The computer-implemented method as claimed in claim 4 or claim 5, wherein a selection probability indicating a higher probability for selection for output has an upward influence on the position of the corresponding candidate output token in the ranking according to the output scores and a selection probability indicating a lower probability for selection for output has a downward influence on the position of the corresponding candidate output token in the ranking according to the output scores.

7. The computer-implemented method as claimed in any of the preceding claims, wherein computing each output score comprises weighting the effect of the similarity score and the selection probability according to first and second weights.

8. The computer-implemented method as claimed in any of the preceding claims, wherein determining each similarity score comprises computing a cosine similarity between the candidate token embedding concerned and the at least one content embedding and wherein, for each candidate output token, generating the output score comprises:

computing a safety score according to
$S_s = \frac{1}{2} \cdot (1 - CS)$, where $S_s$ is the safety score and CS is the cosine similarity; and
computing the output score according to
$S_o = (1 - \alpha) \cdot P + \alpha \cdot S_s$, where $S_o$ is the output score, P is the selection probability, and $\alpha$ is between 0 and 1.

9. The computer-implemented method as claimed in any of the preceding claims, wherein generating the at least one content embedding comprises generating, based on a plurality of strings describing a plurality of categories of prohibited content, a plurality of content embeddings, respectively, and
wherein comparing the candidate token embeddings with the at least one content embedding to determine for each candidate output token the similarity score comprises, for each candidate token embedding:

comparing the candidate token embedding with each of the plurality of content embeddings to generate a plurality of auxiliary scores indicating similarity between the candidate output token and the category of prohibited content; and
selecting the auxiliary score indicating the highest similarity as the similarity score.

10. The computer-implemented method as claimed in any of the preceding claims, wherein when the candidate output tokens are candidates for output by the LLM as part of a response by the LLM which is partially completed, generating each of the plurality of candidate token embeddings comprises generating an embedding of a sentence comprising the partially generated response and the candidate output token concerned.

11. The computer-implemented method as claimed in any of the preceding claims, comprising repeating the steps of generating a plurality of candidate token embeddings, comparing the candidate token embeddings with the at least one content embedding, generating output scores, and selecting a candidate output token for output, for at least one further plurality of candidate output tokens generated by the LLM.

12. The computer-implemented method as claimed in any of the preceding claims, comprising obtaining the selection probabilities from a token distribution generated by the LLM.

13. The computer-implemented method as claimed in any of the preceding claims, wherein the prohibited content comprises any of the categories:

security;
overcoming security measures;
cyber-attacks; and
designing/producing cyber-attacks.

14. A computer program which, when run on a computer, causes the computer to carry out a method comprising:

generating, based on a plurality of candidate output tokens generated by a large language model, LLM, a plurality of candidate token embeddings, respectively and generating, based on at least one string describing prohibited content, at least one content embedding;

comparing the candidate token embeddings with the at least one content embedding to determine for each candidate output token a similarity score indicating similarity between the candidate output token and the prohibited content;

for each candidate output token, generating, based on the similarity score and based on a selection probability assigned by the LLM to the candidate output token, an output score; and

selecting, based on the output scores, a candidate output token for output by the LLM.

15. An information processing apparatus comprising a memory and a processor connected to the memory, wherein the processor is configured to:

generate, based on a plurality of candidate output tokens generated by a large language model, LLM, a plurality of candidate token embeddings, respectively and generate, based on at least one string describing prohibited content, at least one content embedding;

compare the candidate token embeddings with the at least one content embedding to determine for each candidate output token a similarity score indicating similarity between the candidate output token and the prohibited content;

for each candidate output token, generate, based on the similarity score and based on a selection probability assigned by the LLM to the candidate output token, an output score; and

select, based on the output scores, a candidate output token for output by the LLM.

FIGURE 1

FIGURE 2

FIGURE 3

| S11 | Generate candidate token embeddings |
|---|---|

↓

| S12 | Generate content embedding |
|---|---|

↓

| S13 | Compare candidate token embeddings with content embedding |
|---|---|

↓

| S14 | Generate output score for each candidate output token |
|---|---|

↓

| S15 | Select, based on output scores, a candidate output token for output by LLM |
|---|---|

FIGURE 4

Inference
Guidance
Module
300

Prohibited
content

LLM

200

Prompt

Response

100

FIGURE 5

EP 4 722 973 A1

```
                                                              Negative prompt corpus
                                                                        │
                                                                        ▼
   S31 │        Feed prompt into LLM          │          │        Convert into tokens        │ S21
                        │                                                 │
                        ▼                                                 ▼
   S32 │ Obtain token probability distribution │          │   Embed the tokens with embedder   │ S22
                        │                                                 │
                        ▼                                                 ▼
   S33 │    Sample b candidate output tokens    │          │   Save the content embeddings     │ S23
                        │                                  │          (Matrix R)
                        ▼
   S34 │    Embed the candidates with embedder   │
                        │
                        ▼
   S35 │ Compare, via cosine similarity, to each content │◄──────────────────
        │                embedding
                        │
                        ▼
   S36 │ Normalize similarity between [0,1] – 'safety │
        │                 score'
                        │
                        ▼
   S37 │ Combine with the original token probability to │
        │ get an output score (balance defined with α)
                        │
                        ▼
   S38 │  Select token with the largest score for output │
```

# FIGURE 6

| Method | Llama 3 | | | | | | Llama 2 | | | | | |
|---|---|---|---|---|---|---|---|---|---|---|---|---|
| | C1 | C2 | C3 | C4 | C5 | Time | C1 | C2 | C3 | C4 | C5 | Time |
| Clean | 0.82 | 0.85 | 0.93 | 0.66 | 0.82 | 0.15 | 0.92 | 0.95 | 0.96 | 0.91 | 0.9 | 0.10 |
| RAIN | 0.6 | 0.26 | 0.51 | **0.04** | 0.52 | 15.1 | 0.75 | 0.8 | 0.71 | 0.61 | 0.55 | 8.19 |
| Ours | **0.56** | **0.17** | **0.39** | 0.13 | **0.36** | **0.74** | **0.34** | **0.29** | **0.16** | **0.18** | **0.25** | **0.717** |

FIGURE 7

FIGURE 8

FIGURE 9

**EP 4 722 973 A1**

Europäisches
Patentamt
European
Patent Office
Office européen
des brevets

# EUROPEAN SEARCH REPORT

**Application Number**

EP 25 19 4431

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | BEN GANON ET AL: "DIESEL -- Dynamic Inference-Guidance via Evasion of Semantic Embeddings in LLMs", ARXIV.ORG, CORNELL UNIVERSITY LIBRARY, 201 OLIN LIBRARY CORNELL UNIVERSITY ITHACA, NY 14853, 9 March 2025 (2025-03-09), XP091950039, * the whole document * | 1-15 | INV. G06F40/30 G06F40/35 G06F40/56 |
| X,D | Li Yuhui ET AL: "RAIN: Your Language Models Can Align Themselves without Finetuning", , 9 October 2023 (2023-10-09), pages 1-16, XP093357188, Retrieved from the Internet: URL:https://arxiv.org/pdf/2309.07124 [retrieved on 2026-01-22] * sections 3, 3.1, 3.2 * | 1-15 | |

-----

-----

**TECHNICAL FIELDS SEARCHED (IPC)**

G06F

The present search report has been drawn up for all claims

| Place of search | Date of completion of the search | Examiner |
|---|---|---|
| Berlin | 23 January 2026 | Abram, Robert |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LI et al.** Rain: Your language models can align themselves without finetuning. *arXiv:2309.07124*, 2023
- **XU et al.** Safedecoding: Defending against jailbreak attacks via safety-aware decoding. *arXiv:2402.08983*, 2024
- **HUGO TOUVRON et al.** Llama 2: Open foundation and fine-tuned chat models. *arXiv:2307.09288*, 2023
- **JI et al.** *BeaverTails: Towards Improved Safety Alignment of LLM via a Human-Preference Dataset*, 2023
- **STEPHANIE LIN et al.** *Truthfulqa: Measuring how models mimic human falsehoods*, 2021